# EUROPÄISCHE PATENTANMELDUNG

(11) **EP 2 529 617 A1**
(43) Veröffentlichungstag der Anmeldung: **05.12.2012**
(21) Anmeldenummer: 11405265.7
(22) Anmeldetag: 03.06.2011
(51) Int. Cl.: A01K 1/00, A01K 1/03

(54) **Liegeinsel für Haus- und Nutztiere**

(71) Anmelder: Durrer, Antonia, 6066 St. Niklausen (CH)
(72) Erfinder: Durrer, Antonia, 6066 St. Niklausen (CH)

(57) **Zusammenfassung**

Liegeinsel für Haus- und Nutztiere, insbesondere Tiere der Rindergattung oder Ziegen, wobei die Aufteilung und Begehbarkeit derart gestaltet ist, dass jede Liegefläche Geborgenheit, Schutz, Ueberblick und jederzeit eine Möglichkeit anderen Artgenossen auszuweichen bietet. Die Liegeinsel ist mobil, stapelbar, demontierbar, wieder montierbar und mit Witterungsschutz realisierbar und bildet ein räumliches Gestaltungselement.

## Beschreibung

### Technisches Gebiet

Die Erfinung umfasst eine Liegeinsel für Haus- und Nutztiere, für den Schlaf-und Ruhebereich umfassend eine Rahmenkonstruktion, welche mindestens einen Liege- und Aufenthaltsbereich oberhalb einer Bodenfläche bildet.

### Stand der Technik

Oftmals ist die Einrichtung für die Haltung von Tieren nur aus menschlicher Sicht sogenannt "tiergerecht", den Tieren aber gar nicht, oder nur zum Teil, und letztendlich auch den Menschen nicht dienlich. Insbesondere werden im landwirtschaftlichen Bereich Kühe meist in Laufställen mit Liegeboxensystemen gehalten, die nicht ihrem natürlichen Bedürfnis an Geborgenheit entsprechen. Oft ist es auch schwächeren Tieren nicht möglich ihren Artgenossen genügend auszuweichen, sie werden in die Ecke getrieben. Aehnliche Probleme kann man auch bei der Haltung von Ziegen beobachten. Sie werden deshalb auch in Anbindeställen, ähnlich wie Kühe, gehalten. Ziegen haben einen natürlichen Trieb zu Steigen um sich von oben Ueberblick zu verschaffen. Dies wird in einzelnen Laufställen bereits berücksichtigt. Allerdings handelt es sich hier meist um Hobbybetriebe.

Es kann aber auch eine grössere Fläche als Tiefstreu eingestreut werden, was aber, um den Stall sauber zu halten, sehr viel Streumaterial benötigt. Ebenfalls bieten auch hier die offenen Liegeflächen für das einzelne Tier zu wenig Geborgenheit.

Dies hat in beiden Fällen normalerweise die notgedrungene Konsequenz, dass die Tiere enthornt, also verstümmelt werden müssen. Ansonsten wäre für einzelne Tiere der Aufenthalt in einem derartigen Laufstall unzumutbar, die Gefahr der gegenseitigen Verletzung zu gross. Es ist aber eine Frage der Zeit, dass die Tierschutzorganisationen auf diesen Missstand aufmerksam machen und Haltungssysteme verlangen, welche diesen Verstümmelungen Einhalt gebieten.

Die Stallungen sind so konzipiert, dass sich die Betreuungspersonen nicht mehr im Aufenthaltsbereich der Tiere bewegen müssen. Es ist eine zunehmende Verfremdung zwischen Mensch und Tier zu beobachten. Die Tiere "verwildern" im eigenen Stall. Nur mit Fangvorrichtungen, Behandlungsständen und derartigen Einrichtungen kann den Tieren trotz Enthornung beigekommen werden. Das Rudelverhalten wird gestärkt und hat leider auf der Weide schon zu tragischen Unfällen geführt.

Die europäische Landwirtschaft ist heute einem grossen, weltweiten Druck unterstellt, welcher eine grosse Flexibilität vom einzelnen Bauern, Klein- wie Grossbetriebe sind gleichermassen betroffen, verlangt. Es ist fraglich, inwiefern es sich noch lohnt in langjährig bestehende, spezifisch für einen Betriebszweig angelegte, teure Gebäude zu investieren, welche dann nur eben für diesen Zweck eingesetzt werden können und dann wieder mit einem relativ grossen Aufwand umgebaut werden müssen. Viel sinnvoller ist es eine einfache Halle oder je nach klimatischen Verhältnissen gar nur einen befestigten Platz zu realisieren. Die mobile Fütterung ist heutzutage mittels transportablen Heuraufen gelöst. Der Liegebereich muss aber immer noch mit dem Einbau von Liegeboxen, oder mit dem, wie bereits erwähnt, aufwändigen Tiefstreu realisiert werden. Eine kurzfristige, sogar saisonale Umnutzung der Stalleinrichtungen ist nur in Ausnahmefällen möglich.

### Darstellung der Erfindung

Die Aufgabe dieser Erfindung ist es also, den Tieren eine Liegeinsel als Unterkunft zu bieten, welche ihren natürlichen Bedürfnissen möglichst entgegen kommt und den landwirtschaftlichen Betrieben gleichzeitig eine höhere Flexibilität ermöglicht. Zudem soll das Reinigen des Unterkunftsbereiches ohne grossen Einsatz von teurer Technologie (Dungschieber) erfolgen. Die Mensch- Tierbeziehung soll gefördert, das Rudelverhalten auf natürliche Weise minimiert werden.

Der Erfindung liegt die Erkenntnis zugrunde, dass Wildtiere oft im Dickicht Schutz finden und sich dort geborgen fühlen. Sie können sich zurückziehen, behalten aber gleichzeitig die Uebersicht. Durch die Nachahmung eines solchen Dickichtes kommt der Einsatz der erfindungsgemässen Liegeinseln den Bedürfnissen der Kühe, welche ursprünglich im Wald lebten, und den Erfordernissen anderer Tierarten entgegen. Insbesondere auch für Ziegen, welche gerne klettern und von einem Aussichtspunkt den Ueberblick geniessen. Dies wird durch das Stapeln der Liegeinseln erreicht. Sie ermöglichen Geborgenheit, Schutz, Uebersicht und verhindern grosse Angriffsflächen. So ist es möglich auf kleinerem wie grösserem Raum eine Gemeinschaft von Tieren zu halten, ohne unnatürliche Massnahmen wie z.B. das Enthornen zu ergreifen.
Die erfindungsgemässen Liegeinseln erfüllen diese Aufgabe durch ihre spezifische Form und Ausführung. Ebenso ist das raumgestalterische Element ein integrierter Bestandteil der Erfindung.

Durch ihre einfache, leicht zu demontierende, mobile Ausführung bietet sie dem Tierhalter jederzeit die Möglichkeit, die Unterkunft für seine Tiere neuen Bedürfnissen anzupassen. Die Gebäude können saisonal genutzt werden, da sie einmal als Stall dienen, ein andermal, die Liegeinseln demontiert und verräumt, einem anderen Zweck zugeführt werden können. Die gedeckte Version der erfindungsgemässen Liegeinsel ermöglicht auch den Einsatz im Freien, so dass in klimatisch geeigneten Regionen sogar auf das Errichten eines Stalles verzichtet werden kann.

Die Reinigung der Laufflächen ist individuell von den Gegebenheiten des einzelnen Betriebes abhängig. Grosse Flächen werden z.B. mit einem geeigneten Hoffahrzeug, welches auch für andere Einsatzbereiche genutzt werden kann, gereinigt, indem der Dung zusammengestossen wird. Stehen die Liegeinseln auf Spaltenboden wird die Einstreu entsprechend gewählt, eine Reinigung erübrigt sich grösstenteils. Der Dung kann aber auch in eine Entmistungsanlage befördert werden. Sehr kleine Flächen werden kostengünstig von Hand gereingt.

Von Zeit zu Zeit ist es aber nötig die Einstreu der Liegeflächen zu ergänzen. Dies hat zur Folge, dass sich die Betreuungsperson im Liegebereich der Tiere regelmässig aufhalten muss. Automatisch wird eine bessere Mensch-Tierbeziehung gefördert.

### Ausführung der Erfindung

### Kurze Beschreibung der Figuren:

- Fig.1a: Perspektische Ansicht einer sechseckigen Liegeinsel ohne Dachabschlussrahmen
- Fig.1b: Perspektivische Ansicht einer Liegeinsel mit sechseckiger Grundfläche und Dachabschlussrahmen
- Fig.2a: Grundriss einer Liegeinsel mit sechseckiger Grundfläche
- Fig.2b: schematische 3d Ansicht einer Liegeinsel mit sechseckiger Grundfläche
- Fig.3: Grundriss einer Liegeinsel mit achteckiger Grundfläche und vier Liegeflächen
- Fig.4: Grundriss einer Liegeinsel mit runder Grundfläche und vier Liegeflächen
- Fig.5-7: perspektivische Ansichten möglicher seitlicher Verbauung
- Fig.8: perpektivische Ansicht einer Liegeinsel in einer Ecke eines Gebäudes mit seitlicher Verbauung
- Fig.8a: Grundriss einer Liegeinsel in einer Ecke eines Raumes
- Fig.9: Grundriss gemäss Fig. 2a: Liegefläche wird von zwei Tieren genutzt
- Fig.10: Grundriss gemäss Fig. 2a: Liegefläche für Mutter und Jungtier
- Fig.11a: Grundriss einer Liegeinsel sechseckig, gestapelt, bespielsweise um die Längsachse gedreht
- Fig.11b: Perspektivische schematische Ansicht gemäss Fig.11a
- Fig.12a: Grundriss einer Liegeinsel gestapelt, untere Liegeinsel grösser und achteckiger Grundriss
- Fig.12b: Perspektivische schematische Ansicht gemäss Fig.12a
- Fig.13: Grundriss: Mögliche Ausführungen der Bodenfläche
- Fig.14: Perspektivische Ansicht einer Liegeinsel mit aufgestecktem Dach und Witterungsschutz
- Fig.15: Perspektivische Ansicht einer Liegeinsel mit geradem Dach
- Fig.16: Grundriss Liegeinsel aneinandergereiht
- Fig.17: Grundriss Liegeinsel gruppiert
- Fig.18a: Grundriss einer Liegeinsel, Grundfläche aus Holzbalken
- Fig.18b: Perspektivische Aufsicht einer Liegeinsel mit rundem Mittelpfosten
- Fig.18c: Querschnitt des Mittelpfostens mit U-Profilen
- Fig.18d: Grundriss einer Liegeinsel, Grundfläche aus Holzbalken mit Mittelpfosten, Seitenpfosten und Rückenwände
- Fig.19: Schematische 3d Ansicht einer Liegeinsel, Durchmesser oben grösser
- Fig.20: Schematische 3d Ansicht einer Liegeinsel, Durchmesser oben kleiner
- Fig.21a: Querschnitt der Grundfläche als Wanne geformt
- Fig.21b: Querschnitt der Grundfläche mit aufgesetzter Umrandung
- Fig.21c: Querschnitt der Grundfläche mit montierten Gummilappen

### Bezugszeichenliste:

- 1: Liegeinsel
10 Rahmenkonstruktion
100 Rückenwand
101 Seitenpfosten
102 Mittelpfosten
103 Querstrebe
103a obere Querstrebe
104 Stützstrebe
105 Dachabschlussrahmen
106 Führungsmittel (z.B. U-Profil)
107 Bodenrahmen
11 Bodenfläche
110 Spaltenboden
111 Perforation
112 Gefäll
113 Bodenflächenumrandung
12 Seitenverbauung
120 Seitenstrebe
121 Seitenflächen
13 Dach
- 2: Liege- und Aufenthaltsbereich
- 3: Stallwand
- 4: Holzbalken
- 5: Stahlseil
50 Seilspanner

### Beschreibung

### Bauweise und Funktion

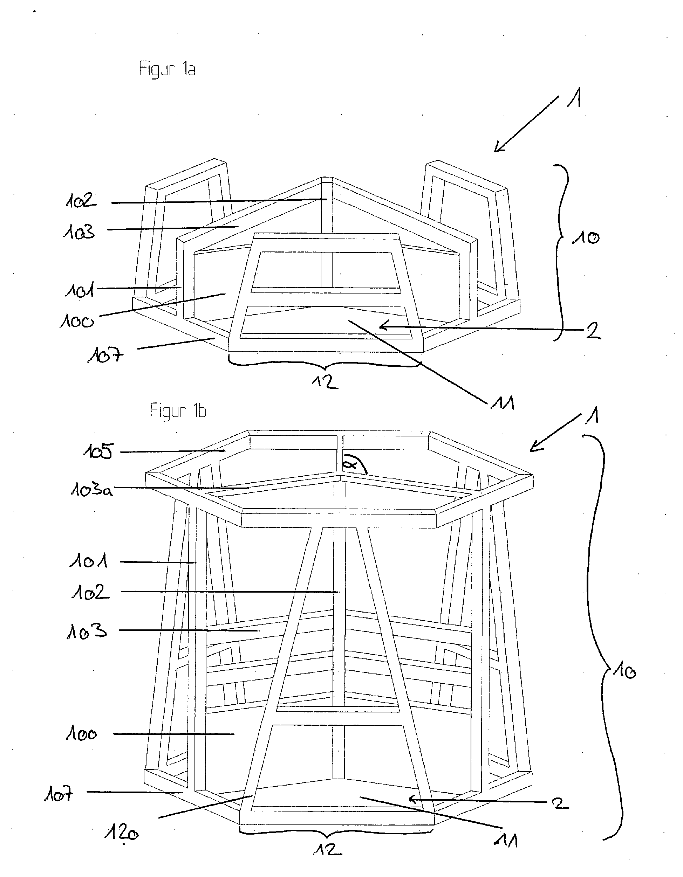

Wie Figur 1a zeigt wird auf die sechseckige Bodenfläche 11 eine Rahmenkonstruktion 10 erstellt. Sie besteht aus Seitenpfosten 101 und einem Mittelpfosten 102 und schliesst die Rückenwände 100 und Querstreben 103 ein. Der Rücken der liegenden Tiere wird durch diese Rückenwände 100 gestützt und geschützt. Die höhe dieser Rückenwand 100 übersteigt leicht das liegende Tier, damit besagter Schutz gewährleistet ist. Gleichzeitig erfüllen diese Rückenwände 100 eine statische Funktion des Aufbaus. Die Rückenwände 100 werden mit Questreben 103 ergänzt. Dieser Aufbau verhindert das Ueberspringen der einzelnen Liegebereiche 2. Damit kein Palisadenefekt entsteht, der Raum übersichtlich bleibt, werden keine Längsstreben verwendet. Um den Liege- und Aufenthaltsbereich 2 zu schützen, wird zudem auf dem Bodenrahmen 107 eine Seitenverbauung 12 angebracht. Figur 1b zeigt eine erweiterte Form der Liegeinsel mit einem Dachabschlussrahmen. Es werden jeweils die Seitenpfosten 101, der Mittelpfosten 102 und die Seitenstreben 120 verlängert, um den Dachabschlussrahmen 105 mittels der oberen Querstrebe 103a zu verbinden.

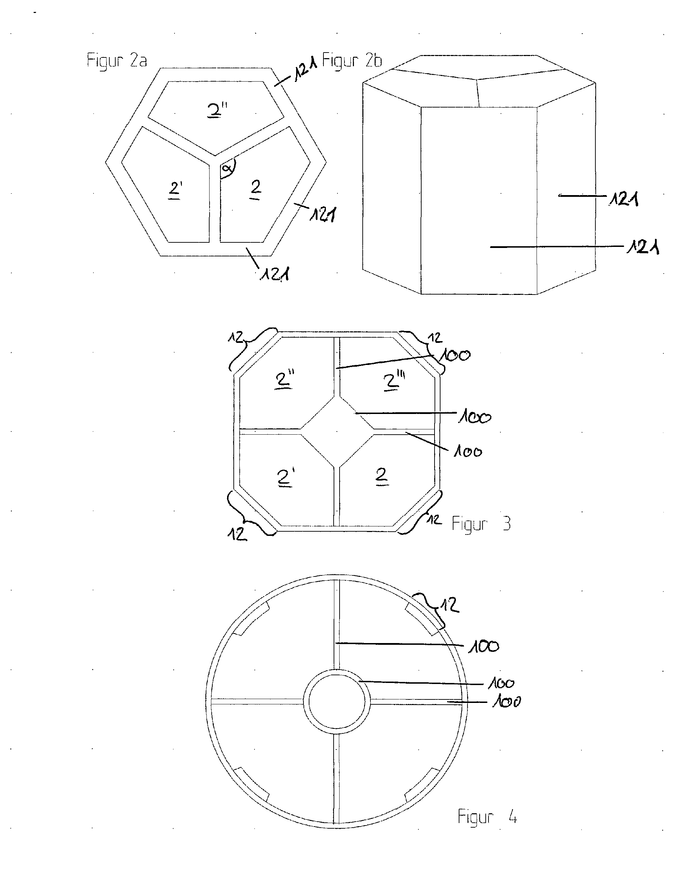

Der Grundriss entspricht einem gleichmässigen Sechseck, aufgeteilt vom Zentrum in drei Fünfecke, wie man im Grundriss der Figur 2a erkennen kann. Die Rückenwände 100 bilden jeweils einen Winkel α von annähernd 120°. Diese Form ist dem liegenden Körper eines Haus- beziehungsweise Nutztieres bestens angepasst. Es kann den Kopf trotz Seitenstreben 120 im Liegen wenden und auch, wie Kühe es oft machen, zurücklegen. Das Tier hat die Möglichkeit den Liege- und Aufenthaltsbereich 2 von beiden Seiten zu betreten, respektive beim Aufstehen die Liegeinseln 1 sofort vorwärts, oder gegebenenfalls auch seitlich, je nach Seitenverbauung 12, zu verlassen. Figur 2b stellt eine vereinfachte schematische Ansicht der Liegeinsel gemäss Figur 1b dar.
Weitere Ausführungsformen zeigen die Figuren 3 und 4 mit einem achteckigen, respektive runden Grundriss.

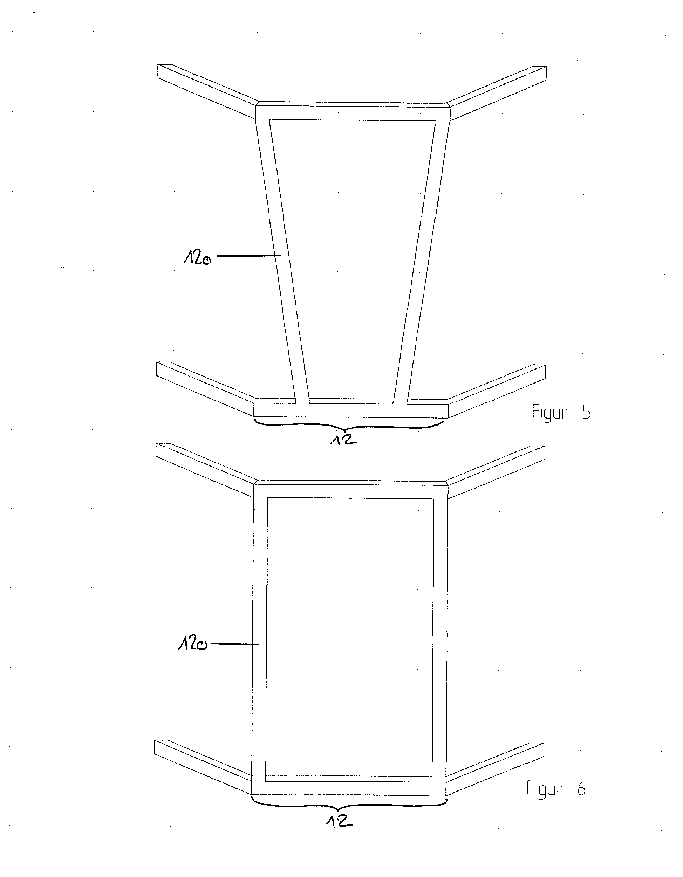

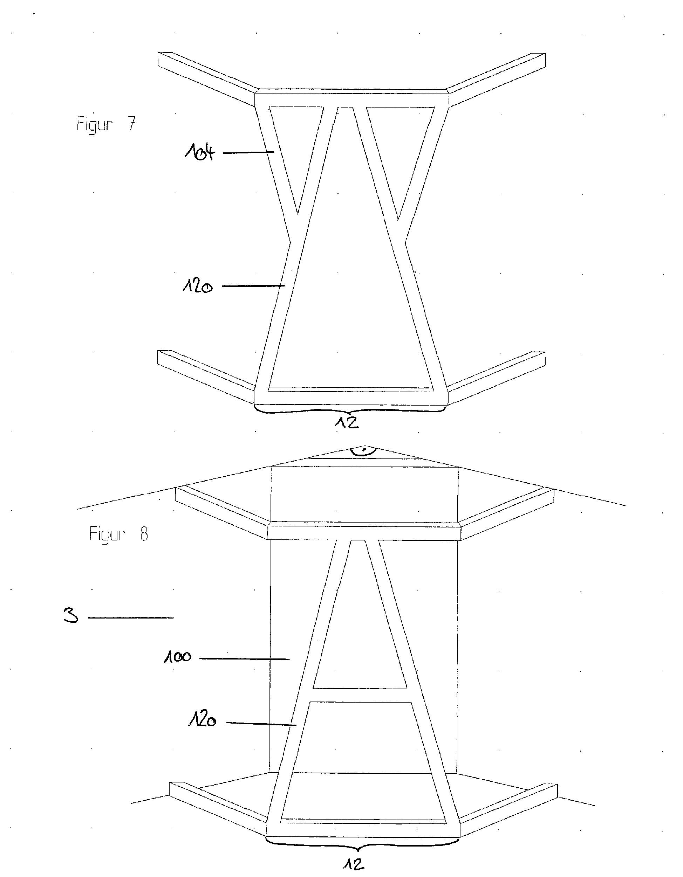

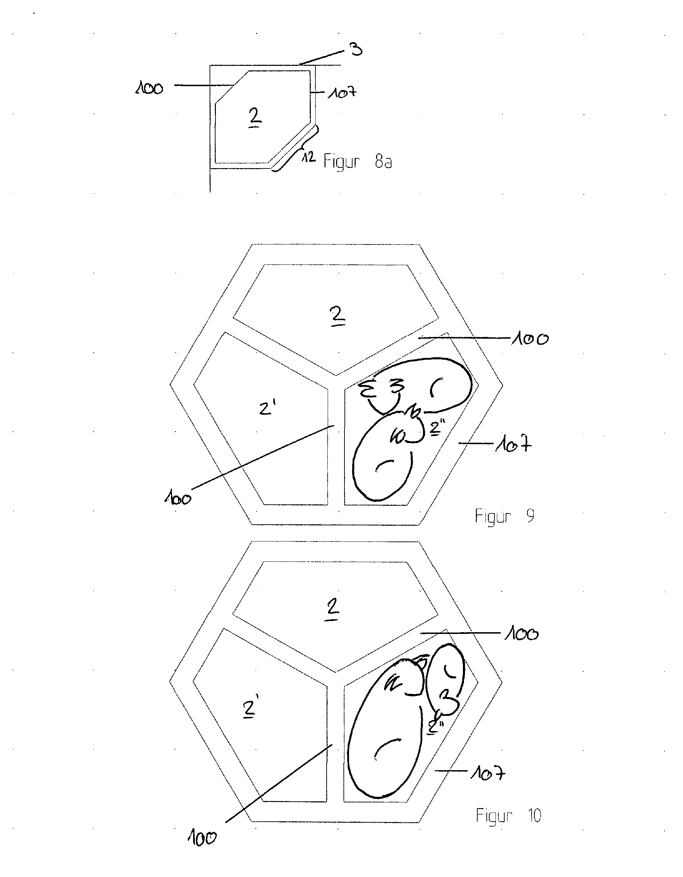

Die Seitenverbauung 12 vermindert das Stören durch Artgenossen und bietet die Möglichkeit die Liegeinsel 1 schützend als Ausweg zu gebrauchen, um an dominanteren Tieren vorbeizukommen.
Je nach Wunsch und Funktionalität kann die Seitenverbauung 12 verschieden ausgeführt werden. Figur 5 zeigt eine Version mit schräg nach innen verlaufenden Seitenstreben 120. Dies bewirkt einen grösseren Ein-und Ausgangsbereich gleichzeitig gekoppelt mit grösserem Schutz des Liege-und Aufenthaltsbereiches 2. Werden die Seitenstreben 120 senkrecht angelegt, wie in Figur 6, so besteht die Möglichkeit, den Liege- und Aufenthaltsbereich 2 auch von Vorne zu betreten, respektive zu verlassen. In Figur 7 wird die Seitenverbauung 12 durch zwei Stützstreben 104 statisch verstärkt.
Um 90° Winkel in einem Raum oder Gehege zu vermeiden kann eine Liegeinsel wie in Figur 8 auch in eine Ecke eines Raumes, oder Geheges, eingebaut werden. Die Seitenverbauung 12 ist hier so gestaltet, dass die Seitenstreben 120 schräg nach innen montiert sind und durch eine Querstrebe 103 verstärkt werden. Die Stallwand 3 bildet einen Teil der Rückwand. Der 90° Winkel wird durch den Einbau der eigentlichen Rückenwand 100 eliminiert. Im Grundriss zeigt dies die Figur 8a.

Wird die Grundfläche ,wie Figur 9 zeigt, etwas grösser gewählt als für ein

Tier erforderlich, bietet die Liegeinsel Platz für mehrere Tiere. Gerne schmiegen sich Jungtiere aneinander. Ist der Liegebereich zu gross, legt sich das Tier automatisch nach hinten versetzt nieder. Im Kopfbereich ist dann noch Freiraum für ein zweites Tier, das auch etwas nach hinten versetzt liegt. Bei Mutterkuhhaltung, in Figur 10 ersichtlich, besteht so für das Kalb die Möglichkeit sich eben am Kopfende der Mutter niederzulassen, was durchaus den natürlichen Bedürfnissen von Mutter und Kalb entspricht.

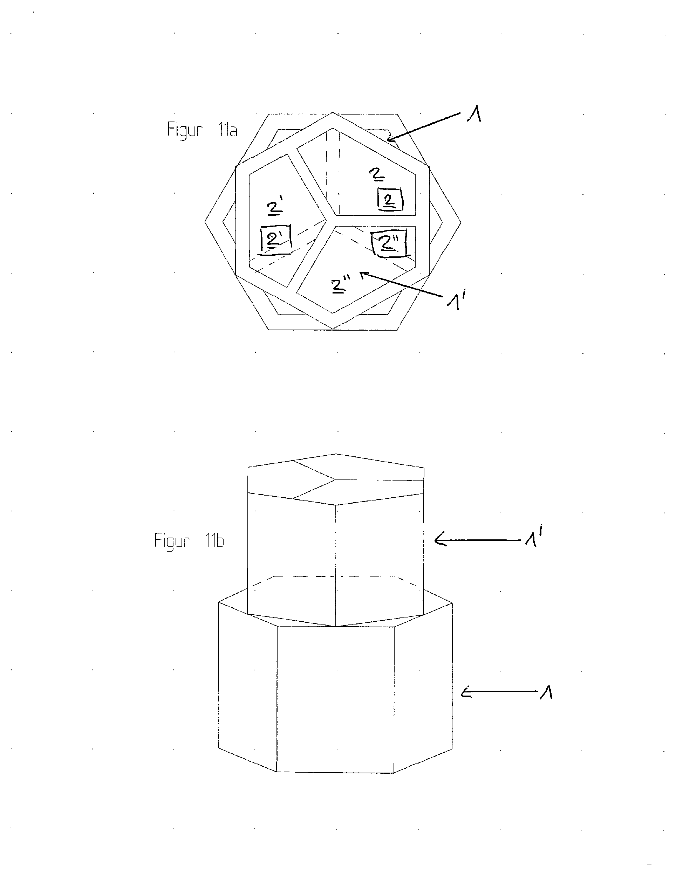

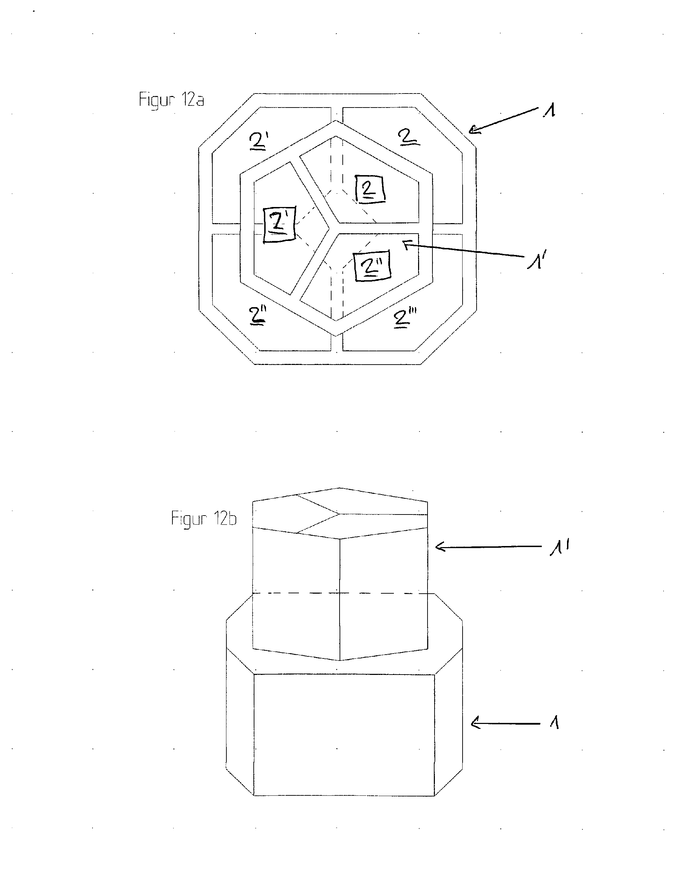

Die Figuren 11 und 12 zeigen die gestapelte Version einer Liegeinsel 1, z.B. für Ziegen, Katzen oder adere Klettertiere. Wird die zweite Liegeinsel 1'wie in Figur 11a um ihre Längsachse gedreht, entstehen jeweils kleine Plattformen zum Betreten der oberen Liege- und Aufenthaltsbereiche 2, 2',2". Dies ist auch in der schematischen Perspektive von Figur 11b zu erkennen. Um diese Plattform zu vergrössern kann beispielsweise die untere Liegeinsel 1 wie in Figur 12a einen achteckigen Grundriss aufweisen. Figur 12b zeigt wiederum die schematische Perspektive. Steighilfen können im Bereich der Seitenstreben 120 angebracht werden. Die obere Liegeinsel 1' wird mit Verankerungen gesichert.

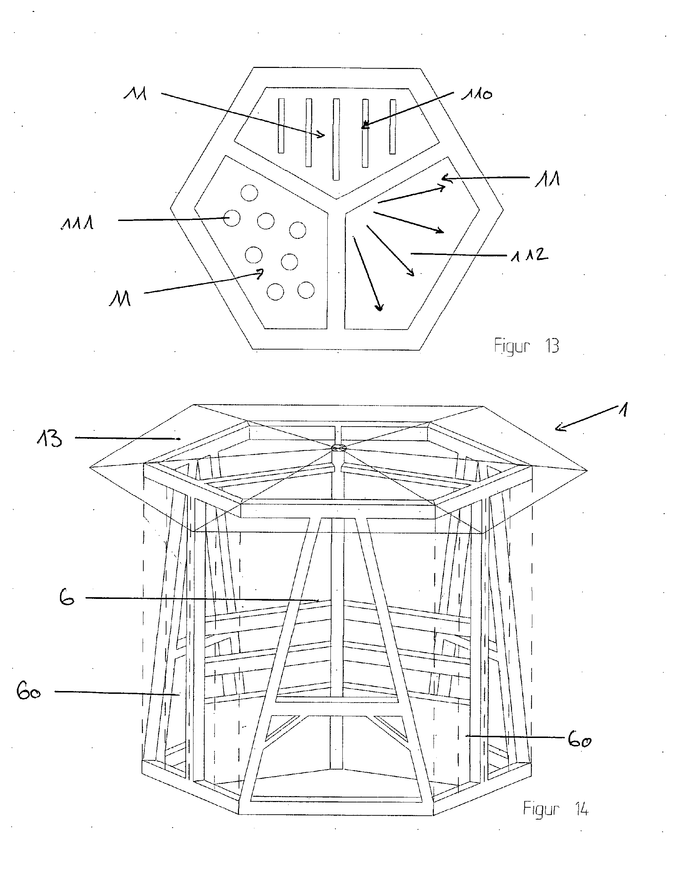

Es ist von Vorteil, wenn der Liege- und Aufenthaltsbereich 2 möglichst trocken gehalten werden kann. Dies kann durch verschiedene Massnahmen erreicht werden. Figur 13 zeigt drei Möglichkeiten: ein Spaltenboden 110, einen perforierten Boden 111 oder eine Bodenfläche 11 mit Gefäll 112, hier dargestellt durch drei Pfeile.

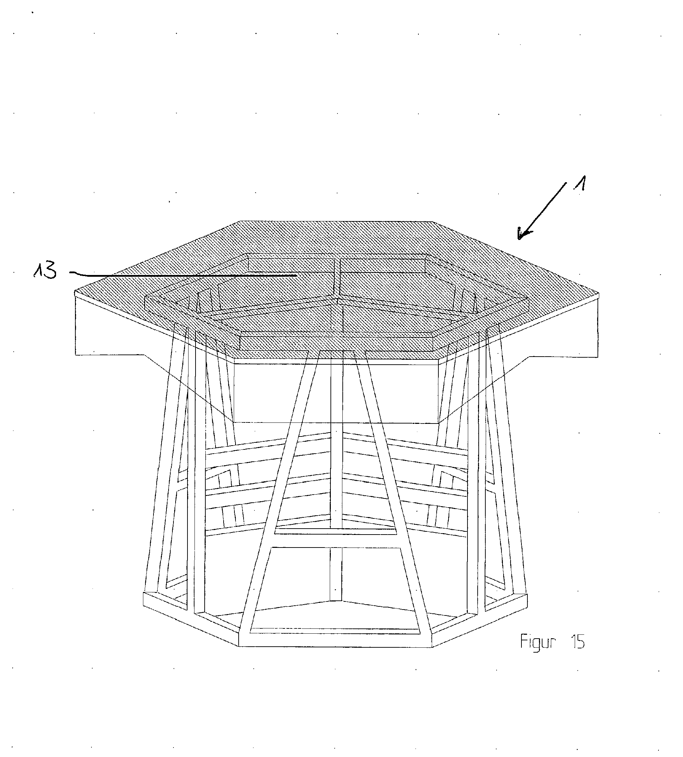

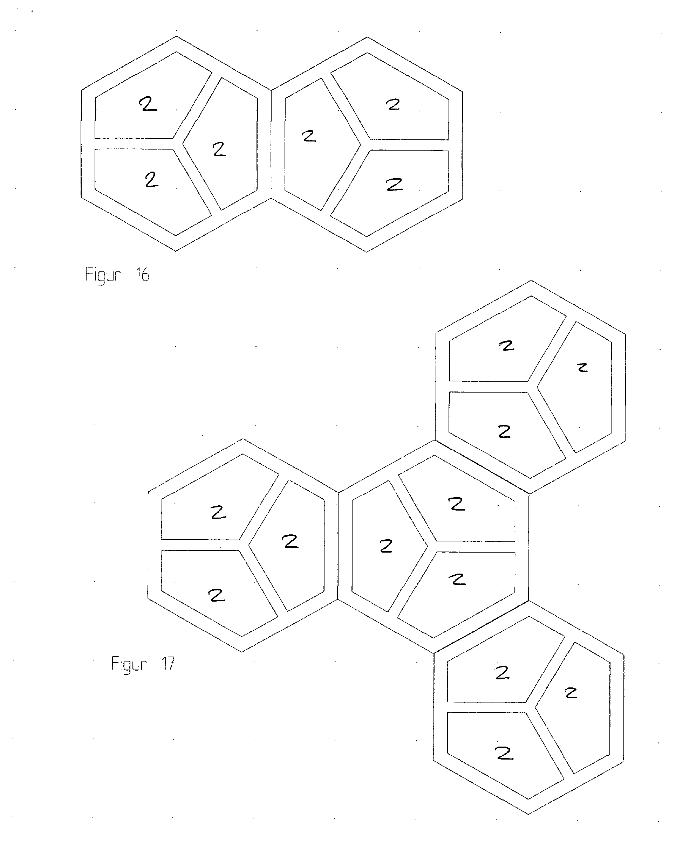

Figur 14 zeigt wie eine Liegeinsel 1 im Freiland mit Dach 13 realisiert wird. Das Dach 13 schützt vor Witterungseinflüssen und kann dementsprechend einen grösseren Radius aufweisen und andererseits einen Witterungsschutz 6 besitzen. Trotzdem ist der Liege- und Aufenthaltsbereich 2 durch einen Lamellenvorhang 60 betretbar. Eine Liegeinsel 1 nur mit einem Dach 13 versehen, wird in Figur 15 dargestellt.
Die Liegeinseln 1können den lokalen Wettereinflüssen entsprechend strategisch gesetzt, gruppiert und aneinander gereiht werden, so dass ein optimaler Schutz erreicht werden kann. Die Figuren 16 und 17 zeigen im Grundriss zwei Möglichkeiten, welche natürlich je nach Situation reduziert oder erweitert werden. Um Platz zu sparen steht der Gruppierung respektive dem Aneinanderreihen der Liegeinseln 1 in einem geschlossenen Raum oder Gehege nichts im Wege. Beobachtungen zeigen, dass die stark verbauten Bereiche von den Tieren durchaus bevorzugt werden.

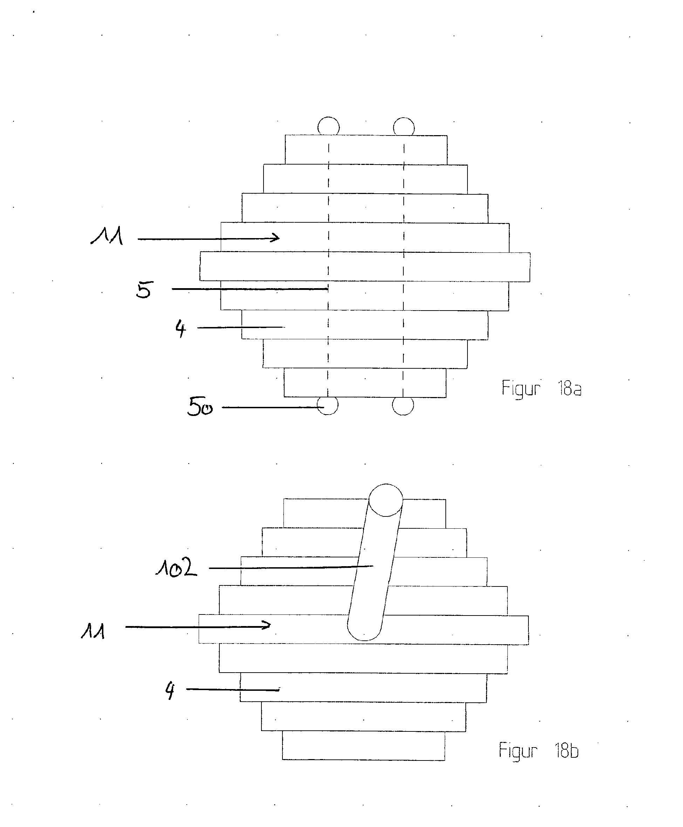

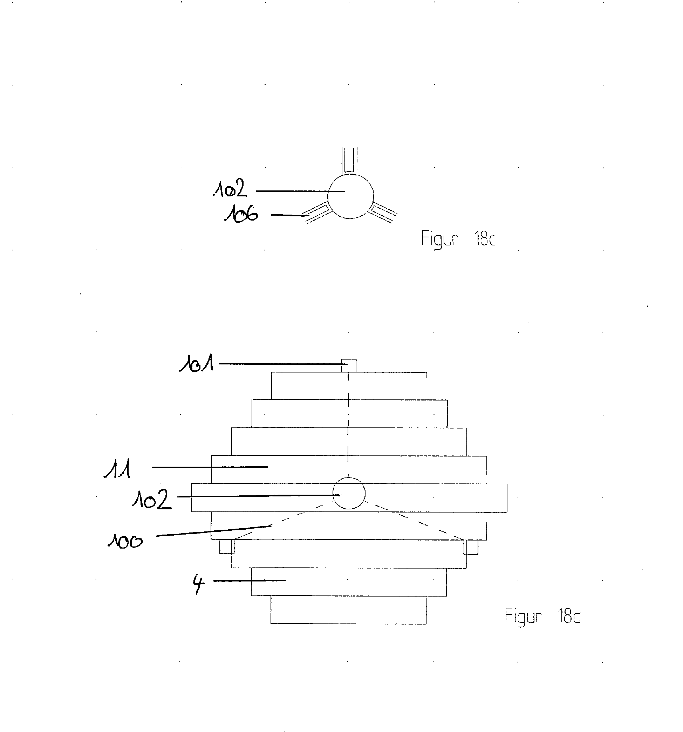

Wie eine Bodenfläche 11 aus einer Holzbalkenlage 4 gefertigt werden kann erkennt man in Figur 18a. Die Liegeinsel 1, beziehungsweise die Bodenfläche 11 sollte ein derartiges Gewicht aufweisen, dass das Verschieben der Liegeinseln 1 nicht durch die Tiere erfolgen kann. Ebenfalls können Verankerungen das Verschieben verhindern. Andererseits soll die Liegeinsel 1 durch ein geeignetes Fahrzeug oder durch Demontage verschoben werden können. Hierfür sind Halterungsvorrichtungen vorgesehen. Die zugeschnittenen Holzbalken 4 werden mittels Stahlseilen 5 zusammengezogen, welche mit einem Seilspanner 50 zusammengezogen werden. Anschliessend wird der runde Mittelpfosten 102 im Zentrum dieser Balkenlage durch Einlassen befestigt, Figur 18b. Drei an diesem Mittelpfosten 102 verschraubte Führungsmittel 106 bilden die Halterung für die Rückenwände 100, Figur 18c. Für die gegenüberliegende Halterung werden drei Seitenpfosten 101 auf dem Rand der Bodenfläche 11, jeweils in der Mitte einer Seite des Sechsecks, wie in Figur 18d angeordnet, gesetzt. Diese drei Seitenpfosten 101 werden ebenfalls mit einem Führungsmittel 106 versehen. Somit können die Rückenwände 100 in diese Führungsmittel 106 geschoben werden.

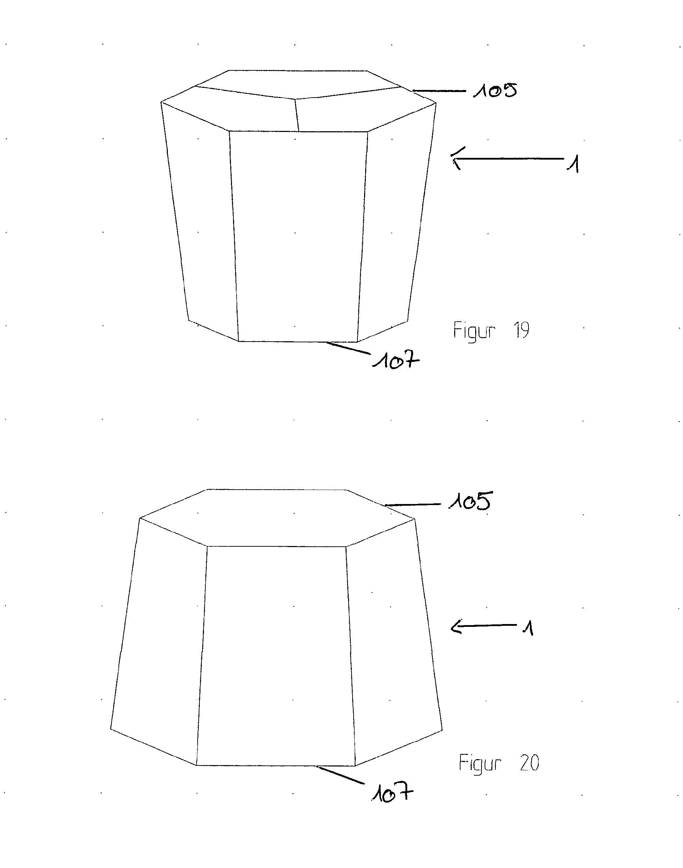

Wird der Durchmesser des Dachabschlussrahmens 105 grösser gewählt wie in Figur 19 schematisch erkennbar, müssen sich die Tiere in einem grösseren Abstand zur Liegeinsel bewegen. Wird der Durchmesser kleiner gewählt wie in Figur 20 erkennbar, bildet dies mehr Platz für Durchgänge. Die Liegeinsel 1 muss allerdings bequem zu betreten sein. Die Seitenverbauung 12 soll keine Fehltritte der Tiere ermöglichen. Dies ist vor allem bei einem grösser oder kleiner gewählten Durchmesser des Dachabschlussrahmens 105 zu beachten. Eventuell sind die schrägen Seitenstreben 120 durch senkrechte Seitenstreben 120 zu ergänzen.

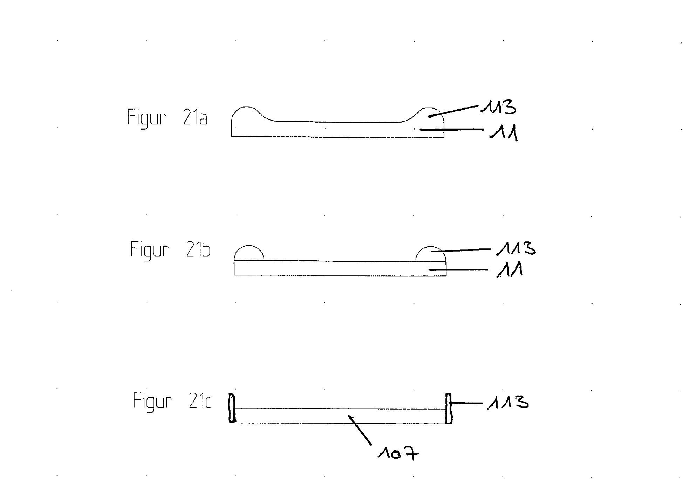

Die Figuren 21a-c illustrieren im Querschnitt drei Möglichkeiten der Bodenflächenumrandung 113. Das Profil der Bodenflächenumrandung 113 kann wie eine Wanne geformt sein, Figur 21a, oder durch die Montage eines halben Rundholzes, Figur 21b, abgeschlossen werden. Auch das Anbringen eines Gummilappens, Figur 21c, bewirkt, dass weniger Füllmaterial der Liege- und Aufenthaltsbereiche 2 verstreut wird. Somit ist es möglich die Bodenfläche 11 nur mittels eines Bodenrahmens 107 zu realisieren. Beim Abheben einer derartigen Liegeinsel 1 wird das Füllmaterial und der angesammelte Dung liegen bleiben und der Stall oder das Gehege kann mit einem geeigneten Hoffahrzeug grossflächig gereinigt werden.

Die Liegeinsel 1 kann mit diversen Materialien gebaut werden, Holz, Beton, Metall oder auch Kunststoff. Jedoch wird vorzugsweise Holz verwendet, da es ein natürlicher Baustoff ist, lärmdämpfend wirkt und einfach verwendbar ist. Je nach Materialien werden andere Verbindungen gewählt. Sie sollen einerseits die Stabilität und andererseits die einfache Montierbarkeit und Demontierbarkeit gewährleisten. Ausmasse der einzelnen Teile sollen der Stabilität des Materials, als auch der Beanspruchung der einzelnen Tierarten und -gattungen entsprechen. Die Masseinheiten ergeben sich ebenfalls aus dem Platzbedürfnis der jeweiligen Tierart oder -gattung. Die Form des Sechsecks ist vorzuziehen, keinesfalls aber Voraussetzung. Je nach Raumgestaltung kann eine andere Grundform realisiert werden und sinnvoll sein.
Als Füllmaterial der Liege- und Aufenthaltsbereiche 2 sind Streue, Stroh, Strohhäcksel, Holzhäcksel, Sägemehl, Humus, Wolle, Stoff, Kunststoff und andere Materialien, je nach Tierart, geeignet.

### Berücksichtigung des Raumes

Die neuartigen Liegeinseln 1 sind frei im Raum platzierbar, aneinander zu reihen oder z.B. für Ziegen oder Katzen zu Türmen stapelbar.
Durch die freie Verteilung im Raum wird dieser strukturiert. Es entsteht ein simuliertes Dickicht wo sich das Tier geschützt zurückziehen kann, wobei keine direkte Angriffsmöglichkeit geboten wird. Trotz des Verbaus sind die Tiere in der Lage sich einen Ueberblick über die Gesamsituation zu verschaffen. Diese Bauart entspricht den natürlichen Bedürfnissen der Geborgenheit, was zu einer allgemeinen Verbesserung des Zustandes der Tiere beiträgt. So wird es unnötig sein, gehörnte Tiere zu enthornen.

Oft werden schwache Tiere von zwei stärkeren in einem Raum oder Gehege buchstäblich in die Ecke gedrängt. Ecken im 90° Winkel des Raumes oder Geheges stellen also einen Stressfaktor dar. Um diese zu entschärfen, kann eine Liegeinsel 1 bestehend aus nur einem Liege- und Aufenthaltsbereich 2, gemäss der Figur 8, die Ecke ausfüllen. Es ist zu beachten, dass die ursprüngliche Ecke schräg abgetrennt wird. Der so entstehende Liege- und Aufenthaltsbereich 2 kann gut von zwei Tieren gleichzeitig benutzt werden.

Da das System auf der Erkenntnis aufgebaut wird, dass sich ein Tier gerne in ein Dickicht zurückzieht, kann es sehr platzsparend in bestehende Gebäude eingebaut werden. Der Raum wird zwar verbaut, aber für die Tiere ist dennoch jeder Quadratmeter begehbar. Es bestehen überall Durchgangsmöglichkeiten, die Gesamtfläche des Raumes beziehungsweise Geheges steht zur Bewegung zur Verfügung.

Der Raum kann, da die Liegeinseln 1 als mobile Raumteiler hergestellt werden, neuen Bedürfnissen angepasst werden. Sie bieten die Möglichkeit zu zweien aneinandergereiht oder zu Gruppen zusammengestellt, oder wie bereits umschrieben, gestapelt zu werden.

Man kann beobachten, dass sich ein Rudel als Gesamtkörper bewegt und als solcher gemeinsam reagiert. Bei Zwischenfällen agieren also alle Tiere eines Rudels gemeinsam und fast gleichzeitig. Es stehen alle auf, laufen auf das Ereignis zu oder fliehen gemeinsam. Insbesondere ist dies bei Rindern in freiräumigen Anlagen, wie es das Tretmistsystem zum Beispiel darstellt, zu beobachten. Bei Störungen erheben sich alle Tiere gleichzeitig. Da bei dem erfindungsgemässen System mit Liegeinseln 1 jede Liegestelle in sich abgeschlossen ist, haben die Tiere bei Störungen nicht unbedingt das Bedürfnis sich gleichzeitig zu erheben, sprich als Gesamtkörper zu reagieren. Da sich das einzelne Tier in seinem Ruhebereich wohl und geschützt fühlt, hat es nicht unbedingt das Bedürfnis auf die Unruhe einzelner Tiere zu reagieren. Das Rudelverhalten wird auf natürliche Weise minimiert.

## Patentansprüche

1. Liegeinsel (1) für Haus- und Nutztiere, für den Schlaf- und Ruhebereich, umfassend eine Rahmenkonstruktion (10), welche mindestens einen Liege- und Aufenthaltsbereich (2) oberhalb einer Bodenfläche (11) bildet,
**dadurch gekennzeichnet, dass** die Rahmenkonstruktion (10) und die Bodenfläche (11) derart gestaltet sind, dass der mindestens eine Liege- und Aufenthaltsbereich (2) von zwei gegenüberliegenden Seitenflächen (121) frei begehbar und vollständig durchquerbar ist und mit mindestens einer Rückenwand (100) ausgestaltet ist, sodass sich Haus- und Nutztiere in den mindestens einen Liege- und Aufenthaltsbereich (2) zurückziehen können.

2. Liegeinsel (1) gemäss Anspruch 1, **dadurch gekennzeichnet, dass** der Liege- und Aufenthaltsbereich (2) zwei Rückenwände (100) aufweist, welche einen Winkel ( α ) von mindestens annähernd 120° einschliessen.

3. Liegeinsel (1) gemäss einem der vorhergehenden Ansprüche,
**dadurch gekennzeichnet, dass** die Liegeinsel (1) mobil und demontierbar ist und in einem Raum oder Gehege frei positionierbar anordbar und stapelbar ist.

4. Liegeinsel (1) gemäss Anspruch 1, **dadurch gekennzeichnet, dass** die Bodenfläche (11) einen runden oder vieleckigen Grundriss aufweist, der in einzelne Liege- und Aufenthaltsbereiche (2) aufgeteilt ist.

5. Liegeinsel (1) gemäss Anspruch 1 **dadurch gekennzeichnet, dass** der Liege- und Aufenthaltsbereich (2) durch eine Mehrzahl von Seitenstreben (120), eine Seitenverbauung (12) bildend, geschützt wird und die Rahmenkonstruktion (10) dadurch stabilisiert wird.

6. Liegeinsel (1) gemäss Anspruch 1, **dadurch gekennzeichnet, dass** die Bodenfläche (11) nur aus einem Rahmen (107) besteht und/oder Perforationen (110) und/oder ein Gefälle (112) aufweist und/oder durch einen Spaltenboden (111) gebildet ist.

7. Liegeinsel (1) gemäss einem der vorangehenden Ansprüche,
**dadurch gekennzeichnet, dass** die Rahmenkonstruktion (10) einen Dachabschlussrahmen (105) mit einem daran befestigten Dach (13) aufweist.

8. Liegeinsel (1) gemäss einem der vorhergehenden Ansprüche,
**dadurch gekennzeichnet, dass** das Dach (13) mit einem Witterungsschutz (6) und/oder einem Lamellenvorhang (60) versehen ist.

9. Liegeinsel (1) gemäss einem der vorangehenden Ansprüche,
**dadurch gekennzeichnet, dass** die Liegeinsel (1) Halterungsvorrichtungen zum Transport aufweist.

10. Liegeinsel (1) gemäss einem der vorangehenden Ansprüche,
**dadurch gekennzeichnet, dass** die Rahmenkonstruktion (10) und/oder die Bodenfläche (11) und/oder der Bodenrahmen (107) mittels Verankerungen befestigt wird.

11. Liegeinsel (1) gemäss einem der vorangehenden Ansprüche,
**dadurch gekennzeichnet, dass** der Dachabschlussrahmen (105) einen grösseren oder kleineren Durchmesser als der Bodenrahmen (107) aufweist und die Seitenflächen (121) schräg nach aussen oder innen geneigt sind.
